# EUROPEAN PATENT APPLICATION

(11) **EP 4 155 926 A1**
(43) Date of publication of application: **29.03.2023**
(21) Application number: 21199280.5
(22) Date of filing: 28.09.2021
(51) Int. Cl.: G06F 9/48, G06F 11/30, G06F 11/32, G06F 11/34, G06F 11/28, G06F 11/14

(54) **METHOD AND DEVICE FOR SEQUENCE MONITORING OF MULTIPLE THREADS**

(71) Applicant: Bayerische Motoren Werke Aktiengesellschaft, 80809 München (DE)
(72) Inventor: Bilra, Manjeet Singh, 85457 Hörlkofen (Wörth) (DE); Abdelhameed, Mohamed-Saad, 85221 Dachau (DE)

(57) **Abstract**

Provided is a method for sequence monitoring of multiple threads being executed at least partly in parallel on a control unit of an automated vehicle. The method comprises a step of providing, to a first monitoring thread of the multiple threads, a first timestamp generated at a first predefined time during execution of a first thread to be monitored. The method further comprises a step of providing, to the first monitoring thread, a second timestamp generated at a second predefined time during execution of a second thread to be monitored. The method further comprises a step of checking, by the first monitoring thread, if the first timestamp is provided before the second timestamp.

## Description

The present invention relates to a method for sequence monitoring of multiple threads being executed at least partly in parallel on a control unit of an automated vehicle, and to a control unit configured to carry out the method.

For an automated or autonomous vehicle, e.g. a car, there is a lot of data processing including perception from multiple sensors. The data processing may be done on multiple cores of an electronic control unit (ECU) thereby taking the data from the sensors as an input and process the data before sending the data to the vehicle.

The background of the invention is with respect to safety critical data processing on multi core electronic control units (ECUs) using the Adaptive AUTOSAR and/or the Linux platform which both enable large data processing, but is not limited thereto.

In general, for autonomous or automated vehicles it is important that heterogeneous sensors may be used together, e.g., for sensor data fusion in order to compute an environmental model of the vehicle to be used for planning a trajectory of the vehicle.

These data, i.e., information, often need to be processed by a control unit in real time to ensure a correct sensor data fusion.

By multi core and/or multi thread data processing, e.g., using the Adaptive AUTOSAR or the Linux System, non-deterministic scheduling of threads is provided.

Hence, due to dynamic scheduling some of the threads may be interrupted by another higher priority thread running in parallel resulting in a delay in the system.

Such delays could range from certain ms to indefinite and may therefore violate the functional safety by overrunning a maximum allowable delay/inaccuracy of the system for autonomous or automated, e.g., highly automated, vehicles. There might also be sporicidal jumps or execution of different threads which may not complaint with the sequence of execution of threads.

Moreover, monitoring of a sequence of multiple threads running on a multi-core control unit is very difficult due to the non-deterministic scheduler used by the Linux and the Adaptive AUTOSAR platforms, respectively.

Against the background of this prior art, an object of the present invention is to provide a device and/or a method which is/are suitable for overcoming at least the above-mentioned disadvantages of the state of the art.

The object is solved by the features of the independent claims. The dependent claims have preferred further embodiments of the invention as their subject matter.

More specifically, a method for sequence monitoring of multiple threads being executed at least partly in parallel on a control unit of an automated vehicle is provided.

That is, the method may be used beneficial especially in situations where at least two threads, i.e., processes, are running simultaneously, i.e. at the same time, on a control unit.

The method comprises a step of providing a first timestamp (taken) at a first predefined time during execution of a first thread to be monitored to a first monitoring thread of the multiple threads.

The method comprises a step of providing a second timestamp at a second predefined time during execution of a second thread to be monitored to the first monitoring thread.

The method comprises a step of checking if the first timestamp is provided before the second timestamp by the first monitoring thread.

The method may be conducted periodically. The monitoring task may or may not be conducted during each circle of the scheduler depending on a size of a shared memory.

In other words, the suggested method provides a solution for monitoring, i.e., determining a correctness of, an order/a sequence of processed steps of one thread with respect to processed steps of at least one another thread. These two threads are called threads to be monitored. The monitoring is done by a so called monitoring thread. However, the method is not limit to two threads to be monitored and one monitoring thread but there may be more than two threads two be monitored by one or more monitoring threads and/or one of the monitoring threads itself may be at the same time a thread to be monitored.

As explained above, each one of the two threads two monitored provides a time stamp at a fixed/predefined time during its execution time to the monitoring thread. The timestamps may include a time at which the timestamp was taken and/or a thread number. However, the method is not limited thereto it is also possible that the timestamp is an information composed of one bit send to the monitoring thread at the predefined time and/or saved at a predefined location of a shared memory being accessible but the monitoring task.

The monitoring task is configured to determine which one of the two timestamps is received first. It is possible that the monitoring task is also configured to determine a time at which the respective timestamp was taken and/or received by the shared memory and/or the monitoring task. The monitoring task knows, i.e., is provided with an information, which timestamp should be provided, i.e., received and/or taken, first.

Thus, the monitoring task is configured to check if the first timestamp is provided before the second timestamp (or optionally vice versa) thereby monitoring a sequence of execution of multiple tasks, here the first and the second task, to be monitored.

The method may further comprise a step of providing the first timestamp at the first predefined time during the execution of the first thread to be monitored to a second monitoring thread of the multiple threads.

The method may further comprise a step of providing the second timestamp at the second predefined time during the execution of the second thread to be monitored to the second monitoring thread.

The method may further comprise a step of checking if the first timestamp is provided before the second timestamp by the second monitoring thread.

That is, additionally to the first monitoring task a second monitoring task may be provided such that double checking of the order of providing the first and the second timestamp is possible.

Both, the first and the second monitoring task, may be implemented in a safe partition of the control unit to ensure a freedom from interference.

Analogously to the first monitoring task, each one of the two threads two monitored provides a time stamp at a fixed/predefined time during its execution time to the second monitoring thread.

The second monitoring task is also configured to determine which one of the two timestamps is received first. and to check if the first timestamp is provided before the second timestamp (or optionally vice versa) thereby monitoring a sequence of execution of multiple tasks, here the first and the second task, to be monitored.

Thus, the description given above with respect to the first monitoring task applies mutatis mutandis to the second monitoring task.

The multiple threads may be executed with a non-deterministic, optionally dynamic, schedule. However, the sequences (to be monitored) itself are deterministic, i.e., predefined.

A non-deterministic schedule is for example used by the Adaptive AUTOSAR and/or the Linux platform as explained in detail above. Both platforms allow for multi thread processing, i.e., the above describe execution of multiple threads in parallel on one or more cores of a control unit. The control unit may comprises/use the Adaptive AUTOSAR and/or the Linux platform. Especially in case of the Adaptive AUTOSAR and/or the Linux platform, the time schedule may allow multi core and/or multi thread processing.

More specifically, AUTOSAR in general uses a three-layer architecture including a basic or base software layer (BSW), a Run-Time Environment (RTE) and an application software layer (ASW). The BSW comprises standardized software modules (mostly) without a functional thread, which provide services necessary to run the functional part of the upper software layers. The RTE is a middleware that abstracts from the network topology for inter- and intra-ECU information exchange between application software components and between the BSW and the ASW. The ASW comprises application software components that interact with the RTE.

Thereby, the AUTOSAR Classic platform architecture distinguishes three software layers running on a microcontroller at the highest level of abstraction: ASW, RTE and BSW. The ASW is largely hardware-independent. Communication between software components and access to BSW is done through RTE, which is the complete interface for applications. BSW is divided into three main layers and complex drivers: Services, ECU abstraction and microcontroller abstraction. The services are also divided into functional groups that provide the infrastructure for system, memory, and communication services. A key concept of the AUTOSAR Classic platform is the Virtual Functional Bus (VFB). This virtual bus is an abstract set of RTEs and decouples applications from the infrastructure. Communication takes place via dedicated ports, i.e. the communication interfaces of the application software must be mapped to these ports. The VFB handles the communication within the individual ECUs and between the ECUs. From an application perspective, no detailed knowledge of lower level technologies or dependencies is required. This supports hardware-independent development and use of application software.

New use cases required the development of the AUTOSAR Adaptive Platform. One example of such a use case is inter alia highly automated driving, where the driver temporarily and/or partially transfers responsibility for driving to the vehicle. This requires, for example, communication with traffic infrastructure (e.g., traffic signs and lights), cloud backends (e.g., access to the latest traffic information or map data), or the use of microprocessors and high-performance computing hardware for parallel processing (e.g., GPUs). In addition, Car-2-X applications require interaction with vehicles and off-board systems. This means that the system must provide secure onboard communication, support for cross-domain computing platforms, smartphone integration, integration of non-AUTOSAR systems, etc. Cloud-based services also require dedicated security measures such as secure cloud interaction and right-ofway for emergency vehicles. They enable remote and distributed services, such as remote diagnostics, over-the-air (OTA) updates, repair and replacement. The core of the AUTOSAR Adaptive Platform is an operating system based on the POSIX standard. The operating system can be used by the application over a subset of POSIX as defined in IEEE1003.13 (namely PSE51). One of the main features of the AUTOSAR Adaptive Platform is service-oriented communication. Two types of interfaces are available for the Adaptive Platform: Services and Application Programming Interfaces (APIs). The platform consists of functional clusters grouped into services and the AUTOSAR Adaptive Platform base. The AUTOSAR Adaptive Platform includes both specification and code.

It is possible, that the first timestamp and the second timestamp are part of or build a first sequence to be monitored out of multiple sequences to be monitored.

That is, the method not limited to one sequence but it is possible that more than one sequence is provided, wherein one task may provide timestamps for more than one of the sequences. This allows a high flexibility of sequence monitoring and therefore also allows for complex thread schedules thereby providing a requested/needed safety integrity level. Thus, the method may be used in or enable highly automated driving

The method may further comprise raising an error flag by use of the first and/or the second monitoring thread in case a result of the checking is that the first timestamp is not provided before the second timestamp.

In other words, as explained above, the first and the optional second monitoring threads are configured to check if the timestamps from the tasks to be monitored are provided in the correct order, i.e., the order defined by the respective sequence they belong to. In case the timestamps are not received in the correct order, for example due to a delay in processing time of at least one of the tasks to be monitored, the first and the optional second monitoring are configured to detect this situation and report it, e.g., to another control unit being connected to the control unit where the failure happened.

The multiple threads may be executed on a same core or on different cores of the control unit.

The first and the second thread to be monitored may be executed at least partly in parallel.

The above described the Adaptive AUTOSAR and/or the Linux platform not only allow for multi thread processing but also for multi core processing of threads thereby increasing a computing power of the control unit such that larger data amounts may be handled in shorter time spans.

The first and the second monitoring thread may not be executed completely in parallel, i.e., at least partly after one another. Thus, the two monitoring threads may monitor each other.

The multiple threads may be executed cyclically, wherein the first and the second timestamp of a previous cycle may be provided to the first monitoring thread, and the first and the second timestamp of a current cycle may be provided to the second monitoring thread.

More specifically, it might be possible that the first and the second timestamp are stored during each cycle in a shared memory, wherein the timestamp of the current cycle overwrites the timestamp of a previous cycle when being stored/written in the shared memory. Thus, at a time execution of the two monitoring threads each one may get a separate snap shot of the timestamps currently stored at a predefined location in the shared memory, and the snap shots may be compared by both threads to the predefined order/sequence. Thereby double checking of each sequence is possible.

The method may further comprise a step of providing, to the first monitoring thread, a start timestamp corresponding to a starting time of the first thread to be monitored.

The method may further comprise a step of providing, to the first monitoring thread, an end timestamp corresponding to an end time of the first thread to be monitored,

The method may further comprise a step of computing, by use of the first monitoring thread, a difference between the start timestamp and the end timestamp.

The method may further comprise a step of comparing, by use of the first monitoring thread, the computed difference to a predefined threshold for monitoring the time schedule of the first thread to be monitored.

The method may further comprise a step of providing, to the second monitoring thread, the start timestamp and the end timestamp.

The method may further comprise a step of computing, by second monitoring thread, a difference between the start timestamp and the end timestamp.

The method may further comprise a step of comparing, by use of the second monitoring thread, the computed difference to the predefined threshold for monitoring the time schedule of the first thread to be monitored.

The method may further comprise raising an error flag by use of the first and/or the second monitoring thread in case a result of the comparison is that the computed difference is beyond, above and/or outside a predefined range around the predefined threshold.

As described above, the control unit is preferably an electronic control unit (ECU) being based on an AUTOSAR Adaptive platform or Linux platform and comprises multiple cores. Therefore, the terminology used in the following description is based on the AUTOSAR Adaptive/Linux Platform standard.

Before initializing, the (application) thread, above called first thread, shall do timestamping from the local hardware (HW) counter of the control unit. According to the time schedule, the thread is allowed to run for a given time. After completion of the thread, again one more timestamp is taken just after the execution of the thread is completed.

So each thread could have at least two timestamps, i.e., one at the start of execution of the thread (so called start timestamp) and one at the end of execution of the thread (so called end timestamp).

Here, a monitoring mechanism is provided to monitor the start and the end timestamp similar to a deadline/alive monitor which ensures that the application thread is completed after the permissible time and that a overrun and/or delay of the thread could be detected.

After execution of the fist thread, one more timestamp is taken (as explained above) to ensure that the thread is completed, wherein this timestamps may also be written in the shared memory buffer.

One thread, preferably at least two threads, are provided for monitoring the execution sequence, execution time, deadline monitoring and/or alive monitoring for all the threads at the given time in the dynamic scheduler. The at least two threads can also do a cross-check to ensure safety integrity of all monitoring threads.

The monitoring could be implemented as one class where different objects of this class could do monitoring for each individual threads, i.e. each thread acting as a class could create different objects based on this monitoring class. This monitoring class may be developed according ASIL Integrity of the item.

The capability to monitor could also be extended to each thread of the scheduler, where each thread has to monitor all the other threads other that itself and report it to the scheduler, e.g. by raising an error flag.

Moreover, the control unit may comprise a shared memory being accessible by each one of the multiple threads.

Providing the first, the second, the end and/or the start timestamp to the first and/or the second monitoring thread may comprise saving, optionally inverse redundantly, the first, the second, the end and/or the start timestamp in the shared memory and reading, by use of the first and/or the second monitoring thread, the saved first, the saved second, the saved end and/or the saved start timestamp from the shared memory.

That is, in the adaptive AUTOSAR/Linux platform/scheduler, a shared buffer/memory, e.g., a POSIX shared memory buffer, is provided which is used to write the timestamps during the starting of execution of a single thread maintaining the integrity of the read and write operations (e.g., using semaphores or disabling interrupts).

The control unit may comprise a hardware counter. The first timestamp may be generated based on a value of the hardware counter at the first predefined time during the execution of the first thread to be monitored. Additionally or alternatively, the second timestamp may be generated based on a value of the hardware counter at the second predefined time during the execution of the second thread to be monitored. Additionally or alternatively, the start timestamp is generated based on a value of the hardware counter at the starting time of the first thread to be monitored.

Additionally or alternatively, the end timestamp is generated based on a value of the hardware counter at the end time of the first thread to be monitored.

That is, at least some of the multiple threads may be configured to do timestamping from the local hardware counter of the control unit.

Furthermore a control unit, optionally an electronic control unit (ECU), is provided, wherein the control unit is configured to carry out the above described method at least partly.

The above given description with respect to the method applies mutatis mutandis to the control unit and vice versa.

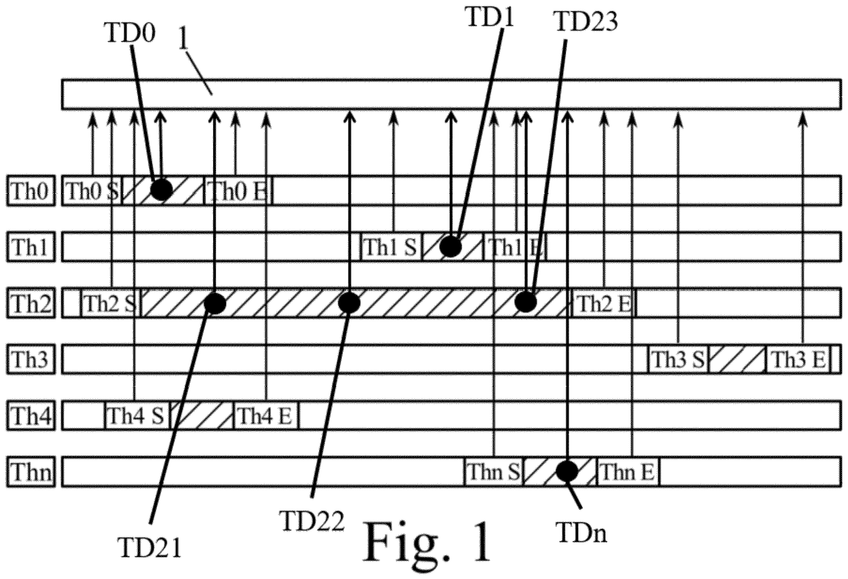

An embodiment is described below with reference to figure 1.
- Fig. 1: depicts schematically a time schedule of multiple threads running on a control unit of an automated vehicle.

In fig. 1 a time schedule of multiple application threads Th0 - Thn running on an application software layer of a (not shown) control unit of an automated vehicle is depicted, as well as a shared memory 1 of the control unit, wherein the depicted time schedule corresponds to one cycle of the method. The method may be carried out cyclically, e.g., periodically.

The shared memory 1 is accessible for all threads Th0 ― Thn by carrying out read and/or write operations. The threads Th0 and Th3 are both so called monitoring threads configured to monitor the time schedule of the other threads Th1, Th2, Th4, Thn, respectively.

At least one of the monitoring threads Th0, Th3 may run on the same control unit as the threads to be monitored Th1, Th2, Th4, Thn, optionally on the same and/or a different core of the same control unit. At least one of the monitoring threads Th0, Th3 may run on a different control unit than the threads to be monitored Th1, Th2, Th4, Thn. Both monitoring threads Th0, Th3 are implemented in a safe partition of the control unit to ensure a freedom from interference. The threads Th0 - Thn are executed at least partly in parallel, e.g. the first and the second thread Th1 , Th2 to be monitored are executed partly in parallel and the first and the second monitoring thread Th0, Th3 are not executed in parallel, on the control unit using a non-deterministic schedule.

By providing two monitoring threads, here Th0 and Th3, it is possible to ensure redundancy, i.e. two ensure double and/or crosschecking of the time schedule.

To ensure that the time schedule is correct, a method for monitoring the time schedule of the threads Th1, Th2, Th4, Thn is carried out. That is, a method for sequence monitoring of multiple threads Th0 - Thn is provided. The aim of the method is at least to detect any delay and/or overrun of the threads to be monitored Th1, Th2, Th4, Thn. By providing two monitoring threads, here Th0 and Th3, it is also possible to ensure redundancy, i.e., two ensure double checking with respect to the threads to be monitored Th1, Th2, Th4, Thn, and/or crosschecking of the time schedule of the monitoring threads Th0 and Th3 itself.

The method will be explained in detail below, wherein the above mentioned control unit is configured to carry out the method.

In a first step of the method, a start timestamp Th0 S, Th1 S, Th2 S, Th3 S, Th4 S, Thn S is generated by each one of the threads Th0 - Thn, respectively. The start timestamp Th0 S, Th1 S, Th2 S, Th3 S, Th4 S, Thn S is generated when the respective thread Th0 - Thn starts, i.e. at the beginning of the execution thereof, based on a value of a hardware counter of the control unit at a starting time of the respective thread Th0 - Thn. The hardware counter, e.g., comprising a monotonic clock, is accessible by each one of the threads Th0 - Thn, respectively.

In a second step of the method, the generated start timestamp Th0 S, Th1 S, Th2 S, Th3 S, Th4 S, Thn S is written into the shared memory 1 by the respective thread Th0 - Thn.

In a third step of the method at least one sequence monitoring timestamp TD0, TD1, TD21, TD22, TD23, TDn is generated by at least some of the multiple threads Th0 - Thn.

More specifically, here both of the monitoring threads Th0, Th3 as well as the threads Th1, Th2, Thn to be monitored generate a sequence monitoring timestamp TD0, TD1, TD21, TD22, TD23, TDn at a fixed/predefined time (i.e. at a certain stage of the algorithm forming the respective thread Th0, Th1, Th2, Th3, Thn) during execution of the respective thread Th0, Th1, Th2, Th3, Thn, wherein the second thread Th2 generated three sequence monitoring timestamps TD21, TD22, TD23.

These generated sequence monitoring timestamps TD0, TD1, TD21, TD22, TD23, TDn are provided to each one of the monitoring threads Th0, Th3, respectively, using read and write operations as explained in detail below.

In a fourth step of the method, the generated sequence monitoring timestamps TD0, TD1, TD21, TD22, TD23, TDn are written into the shared memory 1 by the respective thread Th0, Th1, Th2, Th3, Thn.

In a fifth step of the method, an end timestamp Th0 E, Th1 E, Th2 E, Th3 E, Th4 E, Thn E is generated by each one of the threads Th0 - Thn, respectively. The end timestamp Th0 E, Th1 E, Th2 E, Th3 E, Th4 E, Thn E is generated when the respective thread Th0 - Thn ends, i.e. at the end of the execution thereof, based on a value of the hardware counter at a end time of the respective thread Th0 - Thn.

In a sixth step of the method, the generated end timestamp Th0 E, Th1 E, Th2 E, Th3 E, Th4 E, Thn E is written into the shared memory 1 by the respective thread Th0 - Thn.

Each one of the threads Th0 - Thn carries out the first, the second, optionally the third, optionally the fourth, the fifth and the sixth step during runtime/execution of the respective thread Th0 - Thn and during each cycle of the method, wherein the threads to be monitored Th 1, Th 2, Th 4, Thn do for example sensor data processing in between the second and the third step and the monitoring threads Th0, Th3 carry out, optionally additionally to do sensor data processing and/or other data processing, the steps described in detail below.

In a seventh step of the method, the start timestamps Th0 S, Th1 S, Th2 S, Th3 S, Th4 S, Thn S, the sequence monitoring timestamps TD0, TD1, TD21, TD22, TD23, TDn and the end timestamps Th0 E, Th1 E, Th2 E, Th3 E, Th4 E, Thn E available at the time of execution of the respective monitoring thread Th0, Th3 are provided to the monitoring threads Th0, Th3, respectively. Providing the timestamps to the respective monitoring threads Th0, Th3 means here, that the respective monitoring thread Th0, Th3 reads the timestamps from the shared memory 1.

In detail, the first monitoring thread Th0 starts at the beginning of each cycle of the method. At the beginning of each cycle the start timestamps Th1 S, Th2 S, Th3 S, Th4 S, Thn S, the sequence monitoring timestamps TD0, TD1, TD21, TD22, TD23, TDn and the end timestamps Th1 E, Th2 E, Th3 E, Th4 E, Thn E of all the other threads Th1, Th2, Th3, Th4, Thn of the previous (not shown) cycle are saved in the shared memory 1 and are therefore available for the first monitoring thread Th0. That is, the first the first monitoring thread Th0 reads the start timestamps Th1 S, Th2 S, Th3 S, Th4 S, Thn S, the sequence monitoring timestamps TD0, TD1, TD21, TD22, TD23, TDn and the end timestamps Th1 E, Th2 E, Th3 E, Th4 E, Thn E of all the other threads Th1, Th2, Th3, Th4, Thn of the previous cycle of the method from the shared memory 1. The second monitoring thread Th3 starts at the end of each cycle of the method. At the end of each cycle the start timestamps Th0, Th1 S, Th2 S, Th4 S, Thn S, the sequence monitoring timestamps TD0, TD1, TD21, TD22, TD23, TDn and the end timestamps Th1 E, Th2 E, Th4 E, Thn E of all the other threads th0, Th1, Th2, Th4, Thn of the actual/current (shown) cycle are saved in the shared memory 1 and are therefore available for the second monitoring thread Th3. That is, the second monitoring thread Th3 reads the start timestamps Th0 S, Th1 S, Th2 S, Th4 S, Thn S, the sequence monitoring timestamps TD0, TD1, TD21, TD22, TD23, TDn and the end timestamps Th0 E, Th1 E, Th2 E, Th4 E, Thn E of all the other threads Th0, Th1, Th2, Th4, Thn of the actual cycle of the method from the shared memory 1.

In an eight step of the method, the monitoring threads Th0, Th3 compute, using the timestamps Th0 S, Th1 S, Th2 S, Th3 S, Th4 S, Thn S, Th0 E, Th1 E, Th2 E, Th3 E, Th4 E, Thn E read from the shared memory 1 in the seventh step, a difference between the start timestamp Th0 S, Th1 S, Th2 S, Th3 S, Th4 S, Thn S and the end timestamp Th0 E, Th1 E, Th2 E, Th3 E, Th4 E, Thn E of each threads to be monitored Th1, Th2, Th4, Thn and for the other monitoring thread Th0, Th3, respectively. Furthermore, the each one of the monitoring threads Th0, Th3 checks if the sequence monitoring timestamps TD0, TD1, TD21, TD22, TD23, TDn are provided in the correct sequence/order. Here, the sequence monitoring timestam TD0, TD21, TD22 provided by the first monitoring thread Th0 and the second thread Th2 to be monitored belong to a first sequence and the sequence monitoring timestamps TD1, TD23, TDn provided by the second thread Th2 to be monitored and the nth thread Thn to be monitored belong to a second sequence. Each one of the monitoring threads Th0, Th3 check if the sequence monitoring steps are generated and provided, i.e., written, into the shared memory 1 in the following order TD0, TD21, TD22 for the first sequence and TD1, TD23, TDn for the second sequence.

In a ninth step of the method, the monitoring threads Th0, Th3 compare the computed difference or differences to a predefined threshold for monitoring the time schedule of the threads Th0 - Thn, respectively.

In a tenth step of the method, the monitoring threads Th0, Th3 raise an error flag in case a result of the comparison done for each thread Th0 - Thn, respectively, is that the computed difference is beyond, above and/or outside a predefined range around the predefined threshold. Moreover, the monitoring threads Th0, Th3 also raise an error flag in case a result of the checking in the ninth step is that the sequence monitoring timestamps are not provided in the correct sequence/order.

In an eleventh step of the method, the start timestamps Th1 S, Th2 S, Th4 S, Thn S used in the first monitoring thread Th0 are compared to the start timestamps Th1 S, Th2 S, Th4 S, Thn S used in the second monitoring thread Th3, respectively. Additionally or alternatively, the end timestamps Th1 E, Th2 E, Th4 E, Thn E used in the first monitoring thread Th0 are compared to the end timestamps Th1 E, Th2 E, Th4 E, Thn E used in the second monitoring thread Th3, respectively. If a difference between the start timestamps Th1 S, Th2 S, Th4 S, Thn S of the respective threads to be monitored Th1, Th2, Th4, Thn and/or a difference between the end timestamps Th1 E, Th2 E, Th4 E, Thn E of the respective threads to be monitored Th1, Th2, Th4, Thn exceeds a predefined threshold, an error flag is raised. The eleventh step may be carried out by the first and/or the second monitoring thread Th0, Th3.

In a twelfth step of the method monitoring of a starting time Th0 S of the first monitoring thread Th0 and an end time Th3 E of the second monitoring thread Th3 may be done. The twelfth step may be carried out by the first and/or the second monitoring thread Th0, Th3.

### Reference signs list

- 1: shared memory
- Th0, Th3: monitoring threads
- Th1, Th2, Th4, Thn: threads to be monitored
- Th0 S - Thn S: start timestamp
- Th0 E - Thn E: end timestamp
- TD0, TD1, TD21, TD22, TD23, TDn: sequence monitoring timestamp

## Claims

1. Method for sequence monitoring of multiple threads (Th0 - Thn) being executed at least partly in parallel on a control unit of an automated vehicle, wherein the method comprises:
- providing, to a first monitoring thread (Th0) of the multiple threads (Th0 - Thn), a first timestamp (TD1) generated at a first predefined time during execution of a first thread (Th1) to be monitored,
- providing, to the first monitoring thread (Th0), a second timestamp (TD23) generated at a second predefined time during execution of a second thread (Th2) to be monitored,
- checking, by the first monitoring thread (Th0), if the first timestamp (TD1) is provided before the second timestamp (TD23).

2. Method according to claim 1, wherein the method comprises:
- providing, to a second monitoring thread (Th3) of the multiple threads (Th0 - Thn), the first timestamp (TD1) generated at the first predefined time during the execution of the first thread (Th1) to be monitored,
- providing, to the second monitoring thread (Th3), the second timestamp (TD23) generated at the second predefined time during the execution of the second thread (Th2) to be monitored,
- checking, by the second monitoring thread (Th3), if the first timestamp (TD1) is provided before the second timestamp (TD23).

3. Method according to claim 1 or 2, wherein the multiple threads (Th0 - Thn) are executed with a non-deterministic schedule.

4. Method according to any of claims 1 to 3, wherein the first timestamp (TD1) and the second timestamp (TD23) are part of or build a first sequence to be monitored out of multiple sequences to be monitored.

5. Method according to any of claims 1 to 4, wherein the method further comprises raising an error flag by use of the first and/or the second monitoring thread (ThO, Th3) in case a result of the checking is that the first timestamp (TD1) is not provided before the second timestamp (TD23).

6. Method according to any of claims 1 to 5, wherein the multiple threads (Th0 - Thn) are executed on a same core or on different cores of the control unit.

7. Method according to any of claims 1 to 6, wherein the first and the second thread (Th1, Th2) to be monitored are executed at least partly in parallel.

8. Method according to any of claims 2 to 7, wherein the first and the second monitoring thread (ThO, Th3) are not executed completely in parallel.

9. Method according to any of claims 2 to 8, wherein:
- the multiple threads (Th0 - Thn) are executed cyclically,
- the first and the second timestamp (TD1, TD23) of a previous cycle are provided to the first monitoring thread (Th0), and
- the first and the second timestamp (TD1, TD23) of a current cycle are provided to the second monitoring thread (ThO, Th3).

10. Method according to any of claims 1 to 9, wherein the method further comprises:
- providing, to the first monitoring thread (Th0), a start timestamp (Th1 S) corresponding to a starting time of the first thread (Th1) to be monitored,
- providing, to the first monitoring thread (Th0), an end timestamp (Th1 E) corresponding to an end time of the first thread (Th1) to be monitored,
- computing, by use of the first monitoring thread (Th0), a difference between the start timestamp (Th1 S) and the end timestamp (Th1 E), and
- comparing, by use of the first monitoring thread (Th0), the computed difference to a predefined threshold for monitoring the time schedule of the first thread (Th1) to be monitored.

11. Method according to claim 10, wherein the method further comprises:
- providing, to the second monitoring thread (Th3), the start timestamp (Th1 S) and the end timestamp (Th1 E),
- computing, by second monitoring thread (Th3), a difference between the start timestamp (Th1 S) and the end timestamp (Th1 E), and
- comparing, by use of the second monitoring thread (Th3), the computed difference to the predefined threshold for monitoring the time schedule of the first thread (Th1) to be monitored.

12. Method according to claim 10 or 11, wherein the method further comprises raising an error flag by use of the first and/or the second monitoring thread (ThO, Th3) in case a result of the comparison is that the computed difference is beyond, above and/or outside a predefined range around the predefined threshold.

13. Method according to any of claims 1 to 12, wherein:
- the control unit comprises a shared memory (1) being accessible by each one of the multiple threads (Th0 - Thn), and
- providing the first, the second, the end and/or the start timestamp (TD1, TD23, Th1 S, Th1 E) to the first and/or the second monitoring thread (ThO, Th3) comprises saving, optionally inverse redundantly, the first, the second, the end and/or the start timestamp (TD1, TD23, Th1 S, Th1 E) in the shared memory (1) and reading, by use of the first and/or the second monitoring thread (ThO, Th3), the saved first, the saved second, the saved end and/or the saved start timestamp (TD1, TD23, Th1 S, Th1 E) from the shared memory (1).

14. Method according to any of claims 1 to 13, wherein the control unit comprises a hardware counter, and wherein:
- the first timestamp (TD1) is generated based on a value of the hardware counter at the first predefined time during the execution of the first thread (Th1) to be monitored,
- the second timestamp (TD2) is generated based on a value of the hardware counter at the second predefined time during the execution of the second thread (Th2) to be monitored,
- the start timestamp (Th1 S) is generated based on a value of the hardware counter at the starting time of the first thread (Th1) to be monitored, and/or
- the end timestamp (Th1 E) is generated based on a value of the hardware counter at the end time of the first thread (Th1 E) to be monitored.

15. Control unit, wherein the control unit is configured to carry out the method according to any of claims 1 to 14.
